# EUROPEAN PATENT SPECIFICATION

(11) **EP 1 903 812 B1**
(45) Date of publication and mention of the grant of the patent: **22.06.2011**
(21) Application number: 07253770.7
(22) Date of filing: 24.09.2007
(51) Int. Cl.: H04W 4/24

(54) **Method for implementing home zone application in mobile communication networks**
Verfahren zur Implementierung einer Heimzonenanwendung in mobilen Kommunikationsnetzen
Procédé pour la mise en æuvre d'une application de zone domestique dans des réseaux de communication mobile

(30) Priority: 25.09.2006 GB 0618818; 04.04.2007 GB 0706619
(43) Date of publication of application: 26.03.2008
(73) Proprietor: Hutchison Whampoa Three G IP (Bahamas) Limited, Nassau, New Providence (BS)
(72) Inventor: Hepsaydir, Erol, Maidenhead, Berkshire SL6 5JP (GB); Binucci, Nicola, Maidenhead, Berkshire SL6 6LG (GB)
(74) Representative: Crawford, Andrew Birkby

(56) References cited:
- EP-A- 1 215 929
- WO-A-00/01171
- WO-A-2006/094634
- US-A1- 2003 013 460

## Description

### Field of the Invention

The present invention relates to methods of implementing a Home Zone Application in mobile communication networks. Particularly, this invention relates to a method of providing information to enhance the accuracy of locating mobiles in UMTS (Universal Mobile Terrestrial System) networks for the Home Zone (HZ) Application. Home Zone application is a Location Based Service to charge the call depending on where the call is initiated. If the call is initiated at Home, the call is charged Home Zone tariff. The invention may be implemented in 3G UMTS networks. However the concept can be applied to other network standards i.e. GSM, CDMA, IS95 etc.

### Background of the Invention

It is well known that Location Services are major offerings by 3G (Third Generation) UMTS network operators. There are various ways to locate a mobile terminal. Most commonly used techniques are A-GPS (Assisted Global Positioning System) and Cell ID. A-GPS does not work reliably indoors and Cell ID based Home Zone service is not accurate enough to implement a cost effective Home Zone service.

The present invention describes a Home Zone service implementation, which may prove to be more feasible for a network operator to deploy. The HZ customer is to deploy a specific HZ device and network installation configuration information. This installation may be in the form of software. The network configuration which has communication with a Decision Server in the network via either Internet i.e. Digital Subscriber Line (DSL) or via a wireless modem based on GPRS or 3G etc. The object of the present invention is to implement a HZ application without using the measurements made in the UMTS 3G Radio Network in order to minimise the complexity. The specific HZ device may be as simple as a Radio Frequency (RF) detector, which informs the Decision Server via DSL line if a call is initiated inside home.

US 2003/001346B A1 discloses a method and apparatus for detecting the presence of mobile-terminals in selected locations.

WO 00/01171 refers to a beacon that transmits a signal that can be received by a remote unit.

### Summary of the Invention

Accordingly, the present invention provides a method of implementing a home zone application in a mobile communication network comprising the steps of installing a home zone device in the vicinity of a home zone user's home;
establishing communication between the home zone device and a decision server in the mobile communication network;
identifying a call initiated by the home zone user;
transferring information regarding the call identified in step (c) via the network ;
comparing the information received in step (d) with the user's call details provided by the user's network operator;
determining if the call was initiated by the home zone user in the user's home ; and
identifying the outcome of the determination in step (f) to the decision server ;
charging home zone tariff by the decision server if the call was initiated in the user's home.

### Brief Description of the Drawings

In order that the present invention be more readily understood embodiments will now be described by way of example with reference to the accompanying drawings, in which:-
Fig. 1 shows a block diagram to implement the invention end to end
Fig 2: shows the signalling between the HZ device and the Decision Server which is an arrangement according to a first embodiment of the present invention;
Fig 3 is a flow chart for explaining the operation of the arrangement in Fig. 2;
Fig.4 is a block diagram of an arrangement according to a second embodiment of the present invention; and
Fig 5 is a flow chart for explaining the operation of the arrangement in Fig. 3.

### Detailed Explanation of the Embodiments

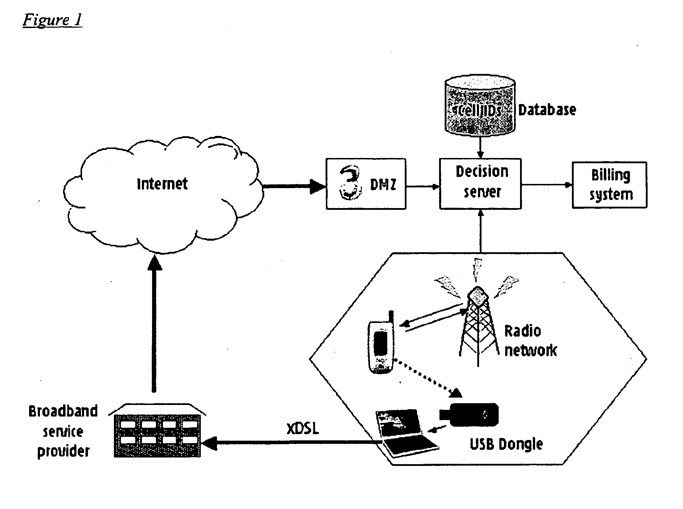

The HZ device in the invention may be implemented by a number of embodiments. Three such embodiments are discussed herewith. However, the invention is not restricted to these embodiments and is considered to include related and obvious variations. The embodiments have the similar purpose, which is to detect the call made in the house and report it to the Decision Server. Each embodiment operates at a different level of complexity. The invention is considered as an 'end to end' concept as shown in Fig. 1, which can work with legacy handsets. The Decision Server is considered as the brain of the end-to-end system to make a decision depending on the reports it receives from the network and other devices involved in the implementation of the embodiments of the present invention.

The embodiments of the present invention are concerned with the establishment of two separate connections or links over the mobile communication network when a HZ user makes a call. One link being the subscriber connection established between the user' terminal and the user's network operator and the other link being the separate connection between the HZ device and the decision server in the network. The HZ tariff can be decided based on information provided by both connections.

### First Embodiment

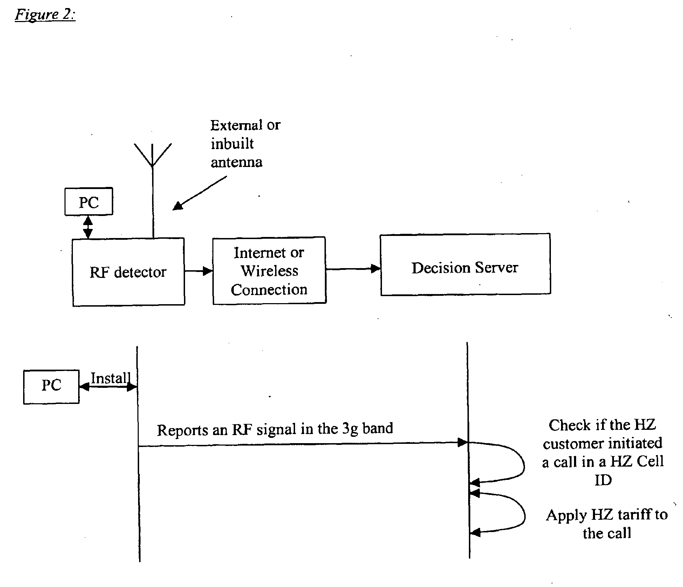

The first embodiment is an implementation of the invention using a low cost 3G Up Link RF monitoring device at home which informs the network when it detects a signal increase in the pre selected 3G Up Link frequency band which indicates that there is a call initiated by a user at home. The Decision Server then compares the information received from the HZ device with the Call Details from the network. If there is a match the call is charged HZ tariff. The implementation according to this embodiment can be seen in Figure 2.

The network operator provides a HZ device to a user i.e. the customer, who would like to take HZ tariff. Each HZ device has a unique address. The HZ device contains a simple RF detector with an external or inbuilt antenna. HZ device is connected to a PC at home via USB. The customer installs the device using the network installation configuration information provided by the operator, which establishes a connection between the HZ device and the Decision Server in the operator's network. This connection with the operators network may be via Internet - DSL line as well as via a wireless modem i.e. GPRS or 3G.

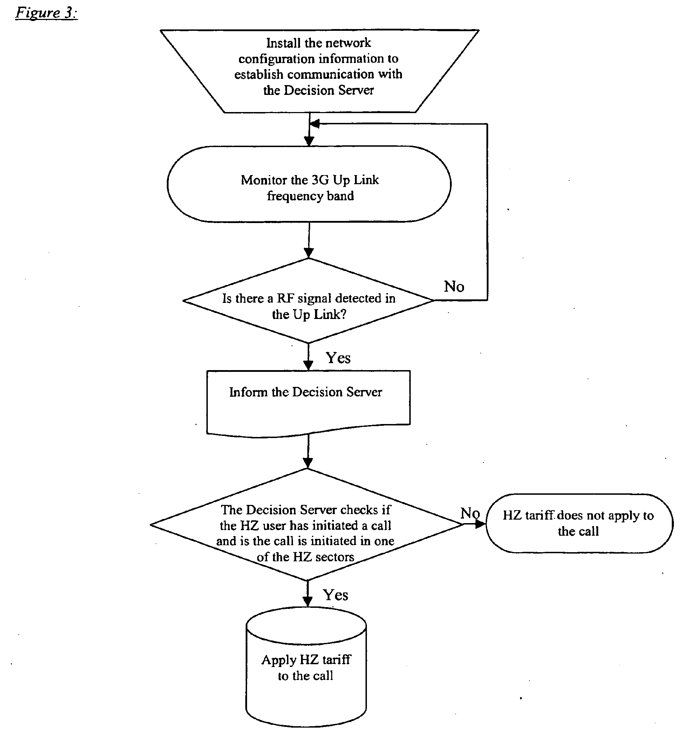

As shown in Fig. 3, the HZ device constantly monitors the signal level in the pre determined 3G Up Link frequency band. If an RF signal is detected in the band the HZ device informs the Decision Server via DSL or a wireless modem that there is a call initiated at home and reports its unique HZ Device ID. At this stage, it is not know that the call detected by the device at home is a HZ call or not. The network then checks if the corresponding HZ customer has initiated a call at the same time by interrogating the Call Detailed Report. If they match the network applies the HZ tariff for that particular call. The Decision Server makes this decision considering the HZ device's report and the result of network interrogation simultaneously.

In order to minimise fraud, the network checks the cell ID when a HZ call is initiated before it makes a decision in order to stop the HZ customers move the HZ device to another location. The Cell IDs are located in the HLR for each HZ customer

### Second Embodiment

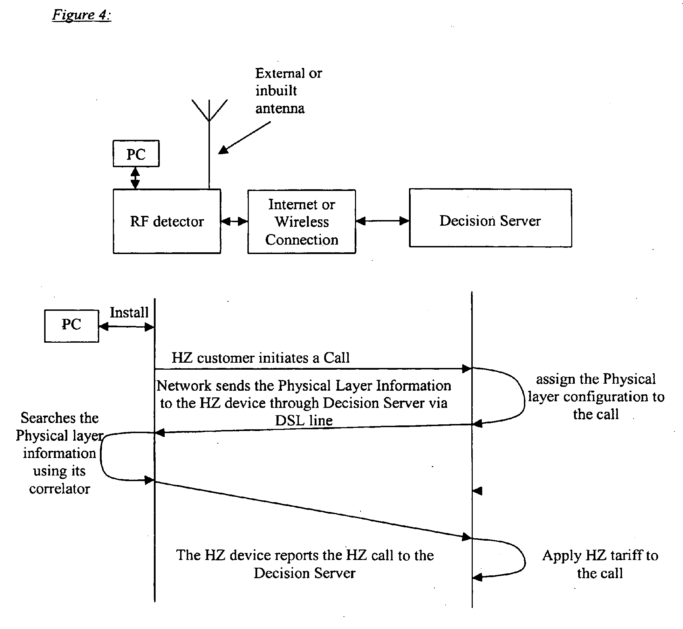

The second embodiment is an implementation of the invention using a HZ device with an RF detector and a correlator to decode the Physical layer parameters. In this case the 3G Radio Network reports the physical layer parameters of a call to the HZ device through Decision Server via DSL line. HZ device starts decoding the radio physical parameters of the call over the air. HZ Device then compares the measured physical layer parameters over the air with the parameters sent by the Decision Server. If they match the HZ device informs the Decision Server that the call is made at home. The connection with the operator's network is via Internet i.e. DSL or via a wireless device which may be a GPRS or 3G modem or any other related device. The implementation according to this embodiment can be seen in Figure 4.

The network operator offers a HZ device to the customer. The HZ device has a unique address. HZ device is connected to a PC at home via USB. The customer installs the device using a network installation configuration information provided by the operator. This installation establishes a connection between the HZ device and the Decision Server in operator's network. The connection may be via Internet - DSL line as well as a wireless modem i.e. GPRS or 3G as shown in Figure 4.

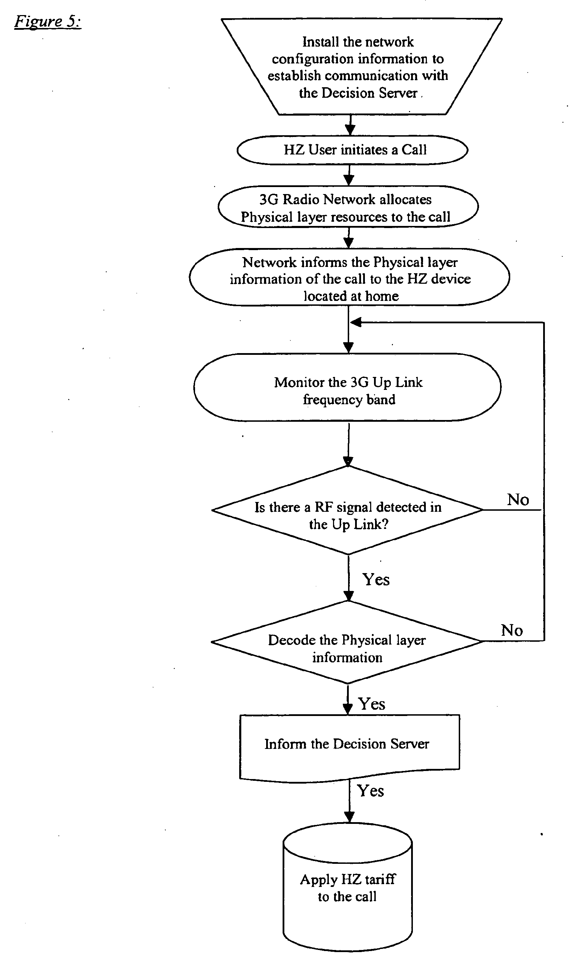

As shown in Fig. 5, the HZ device has an additional correlator compared to the first embodiment. When the HZ user initiates a call, the network detects the call and informs the Physical layer information of that particular call i.e. the scrambling code etc to the HZ device through the Decision Server via DSL. The HZ device first monitors any signal in the 3G Up Link band, if it detects an activity in the band it activates its correlator to detect the Physical layer signals using the information provided by the network. When there is a match the HZ device reports back to the network that it detected a call with the same Physical layer information. Since the HZ device is located at home the call is charged HZ tariff.

In order to minimise fraud, the network checks the cell ID when a HZ call is initiated before it makes a decision in order to stop the HZ customers move the HZ device to another location. The Cell IDs are located in the HLR for each HZ customer.

### Third Embodiment

The third embodiment is an implementation of the invention in which the HZ device transmits a known scrambling code imitating a fake cell and tells the handset that the cell is barred. Handset makes the Cell ID measurements and reports the cell to a Radio Network Controller (RNC). The RNC sees the barred Cell ID and informs the Decision Server that there is a HZ call made at home. The Decision Server then makes a decision accordingly.

The third embodiment can also be implemented without the use of a PC connection, However this may increases the complexity of the operation in the RNC.

A dongle is a hardware device that connects to a computer to authenticate any piece of software or configuration information. A 3G dongle-device transmits only Synchronization Channel (SCH), Burst Channel (BCH) and Primary Common Pilot Channel (P-CPICH) continuously. In this embodiment, the HZ dongle can be plugged into the computer system and configured by a network wizard (NW), which indicates to the dongle which Scrambling Code to use. The dongle then starts transmitting a 3G signal, but with the indication "cell barred" in the System Information i.e. the user equipment or handset (UE) cannot camp on the HZ Cell, not even for emergency services - this is in accordance with 3GPP definition of cell barred. The cell-id of the dongle can be defined by the operator e.g. "Brown-home" etc...

When the 3G Core Network (CN) receives a mobile originated call, the CN first verifies if the subscriber has bought a HZ dongle (this info should be kept in the HLR). If so the CN checks if the cell-id of the calling subscriber corresponds to the one where the subscriber lives (HLR is supposed to have the information data base). If both match, the subscriber might be at home. CN then asks a Radio Network Controller (RNC) for a call Measurement Report. RNC accordingly requests a measurement report from the handset, which replies with a Measurement Report (MR). If the handset is at home, the MR will contain the dongle cell-id (e.g. Brown-home). If the UE is not at home, since the signal transmitted by the dongle is very low, the UE will not detect the cell and therefore that dongle cell-id won't be in the MR. The RNC receives the MR and sends it back to CN which double checks if the cell-id "Brown-home" is in the MR. If so, the user is at home and the call can be charged according to Home Zone tariff. If not the subscriber is not at home and is charged accordingly.

To resolve the slight increase in interference, the NW can switch the device on and off. For example when CN wants to know if the user is at home, the device is switched on. Once it has received the MR from RNC, the device switches off.

More intelligence can be implemented in the device to measure the signals from the surrounding cells to define the level of power to be transmitted. This may require a receiver chain in the device.

In order to stop fraud i.e. moving the HZ device to another location, the network can make a decision by checking the HZ Cell IDs, which are located in the HLR for each HZ customer.

## Claims

1. A method of implementing a home zone application in a mobile communication network comprising the steps of
a) installing a home zone device having a unique device ID in the vicinity of a home zone user's home;
b) establishing communication between the home zone device and a decision server in the mobile communication network;
c) identifying a call initiated by the home zone user by monitoring a pre-determined uplink transmission channel by the home zone device for a signal if a call is initiated in the user's home;
d) submitting information regarding the call identified in step (c) by reporting the device ID by the home zone device to the decision server via the network;
e) comparing details of the home zone user identified from the device ID in step (d) and details of that home zone user maintained in a report provided by the network operator;
f) determining if the call was initiated by the home zone user in the user's home by identifying from the report in step (e) if a call was initiated by the user at the instant the home zone device identified a signal change ; and
g) reporting the outcome of the determination in step (f) to the decision server;
h) charging a home zone tariff by the decision server if the call was initiated in the user's home.

2. A method of implementing a home zone application in a mobile communication network comprising the steps of
a) installing a home zone device having correlator in the vicinity of a home zone user's home;
b) establishing communication between the home zone device and a decision server in the mobile communication network;
c) identifying a call initiated by the home zone user by detecting the user's call and identifying physical layer parameters of the call by the network operator;
d) submitting information regarding the call identified in step (c) by transmitting the physical layer parameters received from the network to the home zone device via the decision server;
e) comparing the information from step (d) with the user's call details provided by the user's network by detecting the presence of a signal in a pre-determined uplink transmission channel by the home zone device, activating the correlator in the home zone device to detect physical layer parameters of the signal , and comparing the parameters received from the network with the parameter detected by the correlator;
f) determining if the call was initiated by the home zone user in the user's home by determining if the parameters received from the network and the correlator match;
g) reporting the outcome of the determination in step (f) to the decision server ;
h) charging a home zone tariff by the decision server if the call was initiated in the user's home.

3. A method of implementing a home zone application in a mobile communication network comprising the steps of:
a) installing a home zone device comprising a dongle fitted with a transmitter in the vicinity of a home zone user's home, the cell ID of the dongle being known to the network operator;
b) establishing communication between the home zone device and a decision server in the mobile communication network;
c) identifying a call initiated by the home zone user by detecting the user's call by the network operator;
d) submitting information regarding the call identified in step (c) via the network by verifying that the dongle has been registered with the user;
e) comparing the information from step (d) with the user's call details provided by the user's network by comparing the cell ID of the location of the user's call and the cell ID of the dongle; if both cell ID's match then requesting a report from the user's handset;
f) determining if the call was initiated by the home zone user in the user's home by detecting if the report contains the same cell ID as the dongle; and
g) reporting the outcome of the determination in step (f) to the decision servers
h) charging a home zone tariff by the decision server if the call was initiated in the user's home.

4. The method as claimed in any of the above claims wherein the home zone device is connected to a computer system.

5. The method as claimed in any one of the above claims wherein the network is a UMTS network.

6. The method as claimed in any of claims 1 and 2 wherein the home zone device comprises an RF detector fitted with an antenna.

7. The method as claimed in claims 1 and 2 wherein connection between the home zone device and the decision server is established via the Internet.

8. The method as claimed in claims 1 and 2 wherein the home zone device is installed in the user's home using network installation configuration information provided by the network operator.

9. The method as claimed in claim 3 wherein the home zone device is configured by a network wizard to transmit information using a particular scrambling code.

## Patentansprüche

1. Verfahren zum Implementieren einer Heimzonenanwendung in einem Mobilkommunikationsnetz, die folgenden Schritte umfassend:
a) Installieren einer Heimzonenvorrichtung mit einer eindeutigen Vorrichtungs-ID in der Nähe einer Heimzonen-Benutzerwohnung;
b) Herstellen der Kommunikation zwischen der Heimzonenvorrichtung und einem Entscheidungsserver in dem Mobilkommunikationsnetz;
c) Identifizieren eines Anrufs, der von dem Heimzonenbenutzer eingeleitet wird, durch Überwachen eines im Voraus bestimmten Aufwärtsverbindungs-Übertragungskanals durch die Heimzonenvorrichtung auf ein Signal, wenn ein Anruf in der Wohnung des Benutzers eingeleitet wird;
d) Übergeben von Informationen bezüglich des Anrufs, der in Schritt (c) identifiziert wird, durch Berichten der Vorrichtungs-ID durch die Heimzonenvorrichtung an den Entscheidungsserver über das Netz;
e) Vergleichen von Einzelheiten des Heimzonenbenutzers, die aus der Vorrichtungs-ID in Schritt (d) identifiziert werden, und Einzelheiten dieses Heimzonenbenutzers, die in einem Bericht geführt werden, der von dem Netzbetreiber bereitgestellt wird;
f) Bestimmen, ob der Anruf von dem Heimzonenbenutzer in der Wohnung des Benutzers eingeleitet wurde, durch Identifizieren aus dem Bericht in Schritt (e), ob ein Anruf von dem Benutzer zu dem Zeitpunkt eingeleitet wurde, zu dem die Heimzonenvorrichtung eine Signaländerung identifizierte; und
g) Berichten des Ausgangs der Bestimmung in Schritt (f) an den Entscheidungsserver;
h) Erheben eines Heimzonentarifs durch den Entscheidungsserver, wenn der Anruf in der Wohnung des Benutzers eingeleitet wurde.

2. Verfahren zum Implementieren einer Heimzonenanwendung in einem Mobilkommunikationsnetz, die folgenden Schritte umfassend:
a) Installieren einer Heimzonenvorrichtung mit Korrelator in der Nähe einer Heimzonen-Benutzerwohnung;
b) Herstellen der Kommunikation zwischen der Heimzonenvorrichtung und einem Entscheidungsserver in dem Mobilkommunikationsnetz;
c) Identifizieren eines Anrufs, der von dem Heimzonenbenutzer eingeleitet wird, durch Detektieren des Anrufs des Benutzers und Identifizieren von Parametern der physikalischen Schicht des Anrufs durch den Netzbetreiber;
d) Übergeben von Informationen bezüglich des Anrufs, der in Schritt (c) identifiziert wird, durch Übertragen der Parameter der physikalischen Schicht, die von dem Netz empfangen wurden, an die Heimzonenvorrichtung über den Entscheidungsserver;
e) Vergleichen der Informationen aus Schritt (d) mit den Anrufeinzelheiten des Benutzers, die durch das Netz des Benutzers bereitgestellt werden, durch Detektieren des Vorhandenseins eines Signals in einem im Voraus bestimmten Aufwärtsverbindungs-Übertragungskanal durch die Heimzonenvorrichtung, Aktivieren des Korrelators in der Heimzonenvorrichtung, um Parameter der physikalischen Schicht des Signals zu detektieren, und Vergleichen der Parameter, die von dem Netz empfangen werden, mit dem Parameter, der von dem Korrelator detektiert wird;
f) Bestimmen, ob der Anruf von dem Heimzonenbenutzer in der Wohnung des Benutzers eingeleitet wurde, durch Bestimmen, ob die Parameter, die von dem Netz und dem Korrelator empfangen werden, übereinstimmen;
g) Berichten des Ausgangs der Bestimmung in Schritt (f) an den Entscheidungsserver;
h) Erheben eines Heimzonentarifs durch den Entscheidungsserver, wenn der Anruf in der Wohnung des Benutzers eingeleitet wurde.

3. Verfahren zum Implementieren einer Heimzonenanwendung in einem Mobilkommunikationsnetz, die folgenden Schritte umfassend:
a) Installieren einer Heimzonenvorrichtung, die einen Dongle umfasst, der mit einem Sender ausgestattet ist, in der Nähe einer Heimzonen-Benutzerwohnung, wobei die Zellen-ID des Dongles dem Netzbetreiber bekannt ist;
b) Herstellen der Kommunikation zwischen der Heimzonenvorrichtung und einem Entscheidungsserver in dem Mobilkommunikationsnetz;
c) Identifizieren eines Anrufs, der von dem Heimzonenbenutzer eingeleitet wird, durch Detektieren des Anrufs des Benutzers durch den Netzbetreiber;
d) Übergeben von Informationen bezüglich des Anrufs, der in Schritt (c) identifiziert wird, über das Netz durch Verifizieren, dass der Dongle für den Benutzer registriert wurde;
e) Vergleichen der Informationen aus Schritt (d) mit den Anrufeinzelheiten des Benutzers, die durch das Netz des Benutzers bereitgestellt werden, durch Vergleichen der Zellen-ID des Standorts des Anrufs des Benutzers und der Zellen-ID des Dongles; wenn beide Zellen-IDs übereinstimmen, dann Anfordern eines Berichts von dem Handapparat des Benutzers;
f) Bestimmen, ob der Anruf von dem Heimzonenbenutzer in der Wohnung des Benutzers eingeleitet wurde, durch Detektieren, ob der Bericht die gleiche Zellen-ID wie der Dongle enthält; und
g) Berichten des Ausgangs der Bestimmung in Schritt (f) an den Entscheidungsserver;
h) Erheben eines Heimzonentarifs durch den Entscheidungsserver, wenn der Anruf in der Wohnung des Benutzers eingeleitet wurde.

4. Verfahren nach einem der vorstehenden Ansprüche, wobei die Heimzonenvorrichtung mit einem Computersystem verbunden ist.

5. Verfahren nach einem der vorstehenden Ansprüche, wobei das Netz ein UMTS-Netz ist.

6. Verfahren nach einem der Ansprüche 1 und 2, wobei die Heimzonenvorrichtung einen HF-Detektor umfasst, der mit einer Antenne versehen ist.

7. Verfahren nach Anspruch 1 und 2, wobei Verbindung zwischen der Heimzonenvorrichtung und dem Entscheidungsserver über das Internet hergestellt wird.

8. Verfahren nach Anspruch 1 und 2, wobei die Heimzonenvorrichtung in der Wohnung des Benutzers unter Verwendung von Netzinstallations-Konfigurationsinformationen, die von dem Netzbetreiber bereitgestellt werden, installiert wird.

9. Verfahren nach Anspruch 3, wobei die Heimzonenvorrichtung durch einen Netz-Wizard zum Übertragen von Informationen unter Verwendung eines bestimmten Verwürfelungscodes konfiguriert wird.

## Revendications

1. Procédé de mise en oeuvre d'une application de zone domestique dans un réseau de communication mobile comprenant les étapes suivantes :
a) installation d'un dispositif de zone domestique ayant une ID de dispositif unique au voisinage d'un domicile d'utilisateur dans la zone domestique ;
b) établissement d'une communication entre le dispositif de zone domestique et un serveur de décision dans le réseau de communication mobile ;
c) identification d'un appel lancé par l'utilisateur en zone domestique en surveillant un canal de transmission sur liaison montante prédéterminé par le dispositif de zone domestique à la recherche d'un signal si un appel est lancé dans le domicile de l'utilisateur ;
d) soumission d'informations concernant l'appel identifié à l'étape (c) en signalant l'ID de dispositif par le dispositif de zone domestique au serveur de décision par l'intermédiaire du réseau ;
e) comparaison des détails de l'utilisateur en zone domestique identifié à partir de l'ID de dispositif à l'étape (d) et des détails de cet utilisateur en zone domestique tenus à jour dans un rapport fourni par l'opérateur de réseau ;
f) détermination si l'appel a été lancé par l'utilisateur en zone domestique dans le domicile de l'utilisateur en identifiant à partir du rapport à l'étape (e) si un appel a été lancé par l'utilisateur au moment où le dispositif de zone domestique a identifié un changement de signal ; et
g) communication du résultat de la détermination à l'étape (f) au serveur de décision ;
h) facturation d'un tarif de zone domestique par le serveur de décision si l'appel a été lancé dans le domicile de l'utilisateur.

2. Procédé de mise en oeuvre d'une application de zone domestique dans un réseau de communication mobile comprenant les étapes suivantes :
a) installation d'un dispositif de zone domestique ayant un corrélateur au voisinage d'un domicile d'utilisateur dans la zone domestique ;
b) établissement d'une communication entre le dispositif en zone domestique et un serveur de décision dans le réseau de communication mobile ;
c) identification d'un appel lancé par l'utilisateur en zone domestique en détectant l'appel de l'utilisateur et identifiant des paramètres de couche physique de l'appel par l'opérateur de réseau ;
d) soumission d'informations concernant l'appel identifié à l'étape (c) en transmettant les paramètres de couche physique reçus du réseau au dispositif de zone domestique par l'intermédiaire du serveur de décision ;
e) comparaison des informations provenant de l'étape (d) aux détails d'appel de l'utilisateur fournis par le réseau de l'utilisateur en détectant la présence d'un signal dans un canal de transmission de liaison montante prédéterminé par le dispositif de zone domestique, activation du corrélateur dans le dispositif de zone domestique afin de détecter des paramètres de couche physique du signal, et comparaison des paramètres reçus depuis le réseau au paramètre détecté par le corrélateur ;
f) détermination si l'appel a été lancé par l'utilisateur en zone domestique dans le domicile de l'utilisateur en déterminant si les paramètres reçus depuis le réseau et le corrélateur correspondent ;
g) communication du résultat de la détermination à l'étape (f) au serveur de décision ;
h) facturation d'un tarif de zone domestique par le serveur de décision si l'appel a été lancé dans le domicile de l'utilisateur.

3. Procédé de mise en oeuvre d'une application de zone domestique dans un réseau de communication mobile comprenant les étapes suivantes :
a) installation d'un dispositif de zone domestique comprenant une clé électronique dotée d'un émetteur au voisinage d'un domicile d'utilisateur dans la zone domestique, l'ID cellulaire de la clé électronique étant connue de l'opérateur de réseau;
b) établissement d'une communication entre le dispositif de zone domestique et un serveur de décision dans le réseau de communication mobile ;
c) identification d'un appel lancé par l'utilisateur en zone domestique en détectant l'appel de l'utilisateur par l'opérateur de réseau ;
d) soumission d'informations concernant l'appel identifié à l'étape (c) par l'intermédiaire du réseau en vérifiant que la clé électronique a été enregistrée avec l'utilisateur ;
e) comparaison des informations provenant de l'étape (d) aux détails de l'appel de l'utilisateur fournis par le réseau de l'utilisateur en comparant l'ID cellulaire de l'emplacement de l'appel de l'utilisateur et l'ID cellulaire de la clé électronique ; si les deux ID cellulaires correspondent, requête ultérieure d'un rapport depuis le combiné de l'utilisateur ;
f) détermination si l'appel a été lancé par l'utilisateur en zone domestique dans le domicile de l'utilisateur en détectant si le rapport contient la même ID cellulaire que celle de la clé électronique ; et
g) communication du résultat de la détermination à l'étape (f) au serveur de décision ;
h) facturation d'un tarif de zone domestique par le serveur de décision si l'appel a été lancé dans le domicile de l'utilisateur.

4. Procédé selon l'une quelconque des revendications précédentes, dans lequel le dispositif de zone domestique est connecté à un système informatique.

5. Procédé selon l'une quelconque des revendications précédentes, dans lequel le réseau est un réseau UMTS.

6. Procédé selon l'une quelconque des revendications 1 et 2, dans lequel le dispositif de zone domestique comprend un détecteur RF doté d'une antenne.

7. Procédé selon les revendications 1 et 2, dans lequel la connexion entre le dispositif de zone domestique et le serveur de décision est établie par l'intermédiaire de l'Internet.

8. Procédé selon les revendications 1 et 2, dans lequel le dispositif de zone domestique est installé au domicile de l'utilisateur en utilisant des informations de configuration d'installation de réseau fournies par l'opérateur de réseau.

9. Procédé selon la revendication 3, dans lequel le dispositif de zone domestique est configuré par un assistant de réseau pour transmettre des informations au moyen d'un code de brouillage particulier.
